# EUROPEAN PATENT APPLICATION

(11) **EP 2 239 987 A1**
(43) Date of publication of application: **13.10.2010**
(21) Application number: 10151180.6
(22) Date of filing: 20.01.2010
(51) Int. Cl.: H04W 64/00

(54) **Reducing transmission of location updates based on loitering**

(30) Priority: 08.04.2009 US 167772 P; 24.12.2009 US 647094
(71) Applicant: RESEARCH IN MOTION LIMITED, Waterloo, Ontario N2L 3W8 (CA)
(72) Inventor: Klassen, Gerhard D., Waterloo Ontario N2L 5Z5 (CA); Brown, Michael S., Waterloo Ontario N2L 5Z5 (CA); Little, Herbert, Waterloo Ontario N2L 5Z5 (CA); Kalu, Kalu O., Waterloo Ontario N2L 5Z5 (CA); Kotwicz Herniczek, Peter Jan, Kelowna British Columbia V1W 2J7 (CA)
(74) Representative: Roberts, Gwilym Vaughan

(57) **Abstract**

The mobile communications device may reduce the amount of location updates transmitted by applying algorithm-based filters. By setting a minimum distance threshold applied to a location update, the mobile communication device reduces the amount of location updates transmitted when the mobile communication device is "loitering" at a specific location. This disclosure describes a use of a minimum threshold used in loitering analysis and improvements to loitering calculations.

## Description

### Cross-Reference To Related Applications

This disclosure claims the priority of U.S. Provisional Application No. 611167,772, filed April 8, 2009, the content of which is incorporated in its entirety herein.

### Background

The present disclosure relates to location updates transmitted from a mobile communications device.

While telephony in the past was limited to voice calls at fixed locales, modem mobile communications devices may be used in a variety of locations. Furthermore, modem mobile communications devices support a large variety of data-enabled applications, including applications that utilize data generated or collected at the mobile communications device. This may include, for example, applications that are aware of the location of the mobile communications device.

Transmissions from the mobile communications device over a wireless communications system consume resources that would be desirable to conserve. This is especially true for a mobile communications device that consumes power when it is transmitting a signal. Each transmission from the mobile communications device consumes power from the battery on the device and utilizes a wireless communications channel during the transmission.

To conserve resources, a solution for filtering transmission of status updates from mobile communications devices would provide an advance in the field.

### Brief Description of the Drawings

The present disclosure will be more clearly understood by reference to the following detailed description of example embodiments and in conjunction with the accompanying drawings by way of illustration. In the drawings, like numerals describe substantially similar components throughout the several views.

Figure 1 is a diagram illustrating a system in which a mobile communications device is transmitting status messages to a recipient application over a wireless communications network in accordance with at least one of the embodiments described in the present disclosure.

Figure 2 is a diagram illustrating the use of a shared database in a server to determine the state of the recipient application in accordance with at least one of the embodiments described in the present disclosure.

Figure 3 is an example illustration depicting the output of a mapping location application unimproved by this disclosure.

Figure 4 is a flowchart illustrating a method executed in a mobile communications device for filtering status updates to be sent by the mobile communications device in accordance with at least one of the embodiments described in the present disclosure.

Figure 5 is a flowchart illustrating a method executed in a mobile communications device for filtering status updates to be sent by the mobile communications device in accordance with at least one of the embodiments described in the present disclosure.

Figure 6 is a flowchart illustrating a method executed in a mobile communications device for filtering status updates to be sent by the mobile communications device in accordance with at least one of the embodiments described in the present disclosure.

Figure 7 illustrates a wireless communications system including an embodiment of a mobile communications device in accordance with at least one of the embodiments described in the present disclosure.

Figure 8 is a diagram illustrating a processor and related components suitable for implementing at least one of the embodiments described in the present disclosure.

### Detailed Description

Modem mobile communications devices may have the capability of collecting or generating information. This information may be included in a status update, where each status update has information that has been collected or generated since the previous status update. A mobile communications device may be configured to generate or collect a plurality of status updates during a period of time, and include the plurality of status updates in a status message transmitted over a wireless network to a recipient application. In this description, a recipient application may be any software, hardware, component, or collection of components that processes status updates from a mobile communications device and generates an output based on the status updates.

One type of recipient application, used as an example in this disclosure, is a location application that processes location updates from a mobile communications device. Examples of location applications may include a mapping application, tracking application, or reporting application. For example, when used as a mapping application, the location application may generate an output comprising a map displayed on a screen that shows the current location, and optionally, the historical location, of a moving device. This type of recipient application may be used in a variety of situations, e.g., police may track the location of squad cars, distribution companies may track the whereabouts of delivery vehicles, businesses or government agencies may track the location of mobile employees, or parents may track the location of children. For some recipient applications, the recipient application is capable of generating a more useful output when the recipient application has a large number of status updates to process. For example, the recipient application may have improved accuracy, granularity, or reliability when the recipient application has a large number of measured data points available to process.

This disclosure describes arrangements which enable a mobile communications device to reduce the number of status updates transmitted to a recipient application by applying algorithm-based filters based on the expected usage by the recipient application. By using the algorithm-based filters described in this disclosure, the mobile communications device may discard a portion of status updates and reduce the number of status updates to include in a status message. This conserves resources that would otherwise be used to transmit the discarded status updates over a wireless network.

For one purpose, a location application may be used to display the location history of a mobile communications device. The location application may provide a better granularity regarding the location history of a mobile communications device when the location application has a large number of historical location updates to process. For example, the location application may display a map showing a "breadcrumb trail" representing the location history of a device. Typically, the location application would plot each data point, such as a longitude and latitude, on a map. In some implementations, a line may be drawn connecting the data points to infer the expected location for areas not directly measured or reported. When there are a greater number of data points, the breadcrumb trail may have greater accuracy or more extensive history in relation to the map. When there are fewer data points to render on the map, the breadcrumb trail may not be accurate in relation to the roads or other items on the map, or the map may display a less extensive breadcrumb trail. For example, the breadcrumb trail may incorrectly appear to go through buildings or obstacles on the map because the smaller number of data points less accurately represents the actual path of the device. Similarly, if a location application is used to calculate historical velocity for a moving device, a large number of time-stamped location measurements may provide a more accurate determination the velocity. For these purposes, it is desirable to have a large number of location measurements available for the location application to process while conserving resources used to transmit the location measurements.

The present disclosure relates to mobile communications systems, which may be implemented using a variety of electronic and optical technologies, including but not limited to: analog electronic systems; digital electronic systems; microprocessors and other processing elements; and software and otherwise embodied collections of steps, instructions, and the like, for implementing methods, processes, or policies in conjunction with such systems and processing elements. It will be appreciated that in the relevant arts, various signal leads, busses, data paths, data structures, channels, buffers, message-passing interfaces, and other communications paths may be used to implement a facility, structure, or method for conveying information or signals, and are often functionally equivalent. Accordingly, unless otherwise noted, references to apparatus or data structures for conveying a signal or information are intended to refer generally to all functionally equivalent apparatus and data structures.

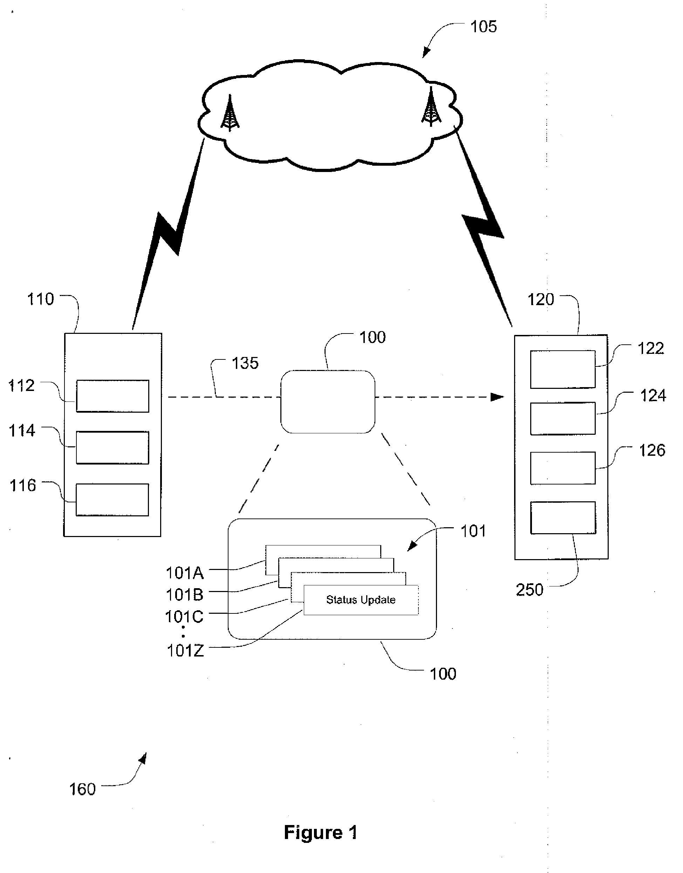

Figure 1 depicts an example embodiment of a communications system 160 in which aspects of the present disclosure may be implemented. As best seen in Figure 1, system 160 includes a mobile communications device 110 adapted to transmit (as shown by arrow 135) a status message 100 over a wireless communications network 105 to a recipient application 250 running on a recipient mobile communications device 120. Status message 100 is an instance of one status message sent in a sequence of status messages. Status messages, such as status message 100, may contain a plurality of status updates 101 such as status updates 101A, 101B, 101C and 101Z. Although four status updates 101A, 101B, 101C and 101Z are shown, instances of status message 100 may contain any suitable number of status updates, including one.

The recipient application 250 may for example (but without limitation) be a location application. In that case, each status update 101A, 101B, 101C, and 101Z may be a location update and may comprise, for example, any one or more of a longitude, latitude, relative position, absolute position, altitude, velocity, timestamp, or other location information collected by a location module in the mobile communications device 110. Recipient application 250 could also be an application unrelated to location, in which case mobile communications device 110 could send, and recipient application 250 could receive, any suitable status updates of a general nature. Further, mobile communications device 110 could send status updates containing a mixture or combination of location-related information and general information. Moreover, mobile communications device 110 could send a mixture of status updates, some comprising location information and others comprising information of a general nature. Recipient application 250 could receive the any of these status updates and select for processing those updates relevant to the application.

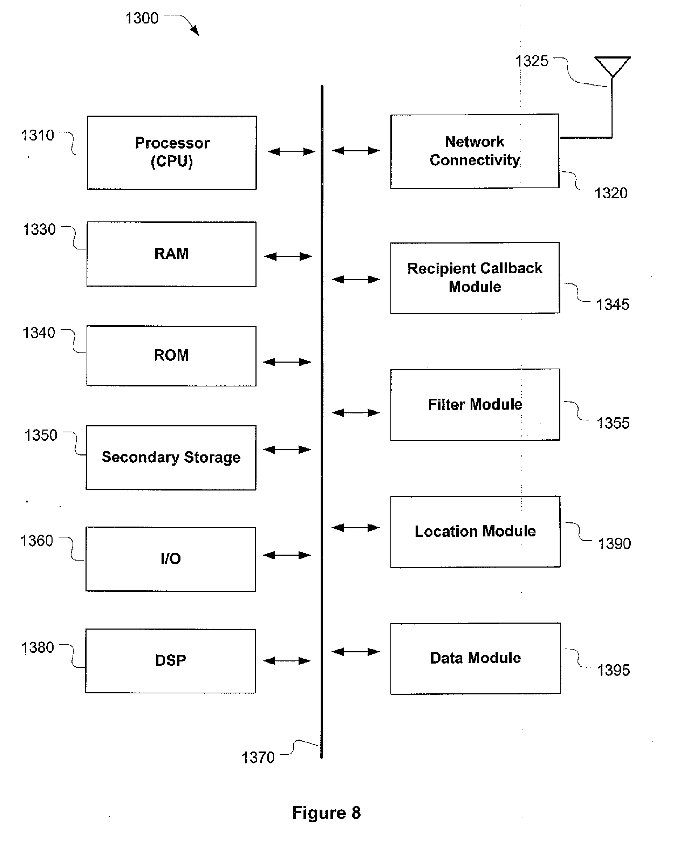

Mobile communications device 110 may take the general form of mobile communications device 1300 as described further in connection with Figure 8. In an example embodiment, mobile communications device 110 may further comprise a message generator 112, a mode selector 114, and a status update assembler 116. The status update assembler 116 may, for example, comprise a location module, data module, or other module operative to generate or collect status updates at the mobile communications device 110. The status update assembler 116 may also comprise a filter module according to another aspect of this disclosure, wherein the filter module may discard or select for use status updates using algorithm-based filters. The message generator 112, responsive to the mode selector 114, is operable to generate status messages comprising status updates and cause the status messages to be transmitted to recipient application 250 using a selected message transmission mode.

Recipient mobile communications device 120 may take the general form of mobile communications device 1300 as described further in connection with Figure 8. The recipient mobile communications device 120 may comprise one or more components as described further in connection with Figure 8, such as one or more processors, memory, network connectivity, and input/output (including, but not limited to a display). The recipient application 250 may be executed using one or more of these components such that it is capable of receiving status updates 101A, 101B, 101C and 101Z in status message 100 from mobile communications device 110. In some embodiments, the recipient application 250 or the recipient mobile communications device 120 may further comprise components such as a status message processor 122, a status update processor 124, and a display 126. If present, the status message processor 122 may receive status messages from mobile communications device 110 and provide the status updates included in each status message to the status update processor 124. The status update processor 124 may operate as part of the recipient application 250 and may be operable to indicate that recipient application 250 is actively processing status updates. As a non-limiting example, status update processor 124 may comprise a database record generator, a request message generator, a timestamp generator, or any other component operable to indicate that the recipient application 250 is actively processing status updates in accordance with this disclosure. The recipient application 250 may generate an output based on the status updates and send the output to the display 126, if present. It is understood that the recipient application 250 may generate other types of output, not limited to visual output sent to a display 126.

As best seen in Figure 1, in an example embodiment according to an aspect of this disclosure, recipient application 250 is located on recipient mobile communications device 120. In other embodiments, recipient application 250 may be located on any suitable machine or machines operatively connected to the wireless communications network 105. For example, the recipient application 250 may exist in one or more servers, one or more mobile communications devices, a personal computer, or a combination of one or more machines operable to run components of a recipient application 250.

In some implementations a recipient application 250 may comprise two or more application components that are associated with each other, such as a collector component and an output component. The collector component may be used to receive and store the status updates without actively processing the status updates to generate an output, and the output component may be used to generate the output. Regardless of whether the collector component and the output component are executed by the same machine or by different machines, they are referenced together as a recipient application 250 in this disclosure.

When recipient application 250 is actively processing the status updates 101, recipient application 250 generates an output based on the status updates 101. In the case where the recipient application 250 represents a location application, the output may comprise a map showing the current and historical location of mobile communications device 110 on the screen or display of the recipient mobile communication device 120. These are merely examples of the form in which an output may be presented or conveyed to a user; one of skill in the art will appreciate that other forms of output may also be used without departing from the scope of the present disclosure.

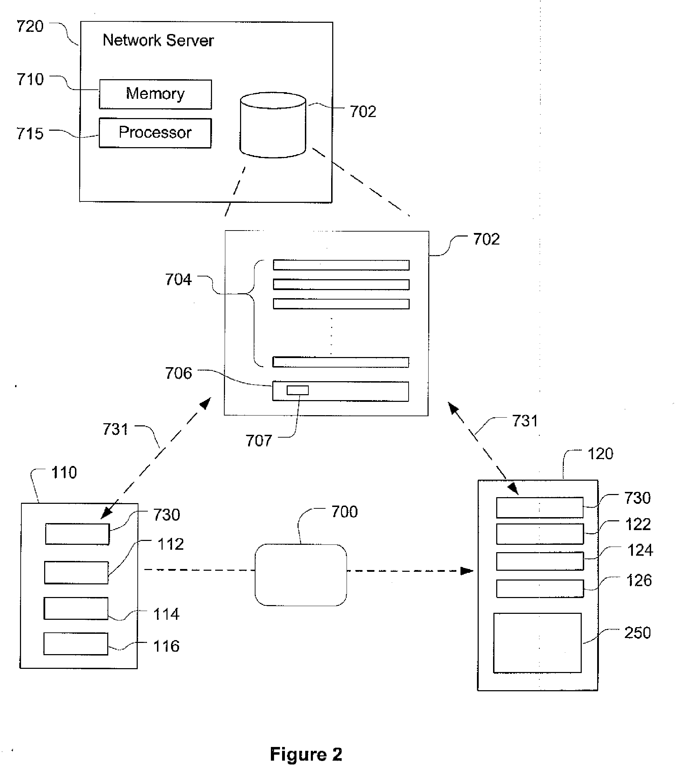

Figure 2 is a diagram illustrating an example embodiment according to an aspect of the present disclosure in which a shared database 702 in a server 720 is employed to determine the state of the recipient application. The server 720 comprises memory 710 capable of storing a database 702. The memory 710 also stores computer readable instructions for operating a processor 715 according to this disclosure. The database 702 maintains data records, such as data records 704, 706, that are accessible by one or more mobile communications devices using database access manager 730. The one or more mobile communications devices may, for example (but without limitation) be a group of subscribers to a service which provides them access to utilize the server 720 and database 702. The data records 704 may comprise information about the group, status updates, or configuration information regarding each subscriber or member of the group. The database access manager 730 may use or incorporate any appropriate protocol, system, program, or process (as shown by arrow 731) which allows mobile communications device 110 and recipient mobile communications device 120 to access the data records in database 702. Some examples of database access manager 730 accessing 731 data records in database 702 may include: a hypertext transfer protocol (HTTP) request and response, a SMS message used for request and response, a structured query language (SQL) command included in a message, or any network protocol used for database access from a client machine to a host database-enabled application. The database access manager 730 may initiate a connection at a regular time interval by the client, may receive a database update sent by the server 720 at a regular time interval, or may receive an irregularly transmitted message sent by the server 720 in response to a change in database 702.

In this example, mobile communications device 110 sends status messages, such as status message 700, directly to recipient mobile communications device 120. Alternatively, mobile communications device 110 may send the status messages to database 702 using database access manager 730, where the status messages comprise data records with status updates that are added to database 702. When status updates are stored in database 702, the recipient application could be any recipient application which processes the status updates stored in the database 702, such as a server-based location application or a location application running on a mobile communications device. For example, the recipient application could comprise a collector application running on server 720 and an output application running on a recipient mobile communications device 120.

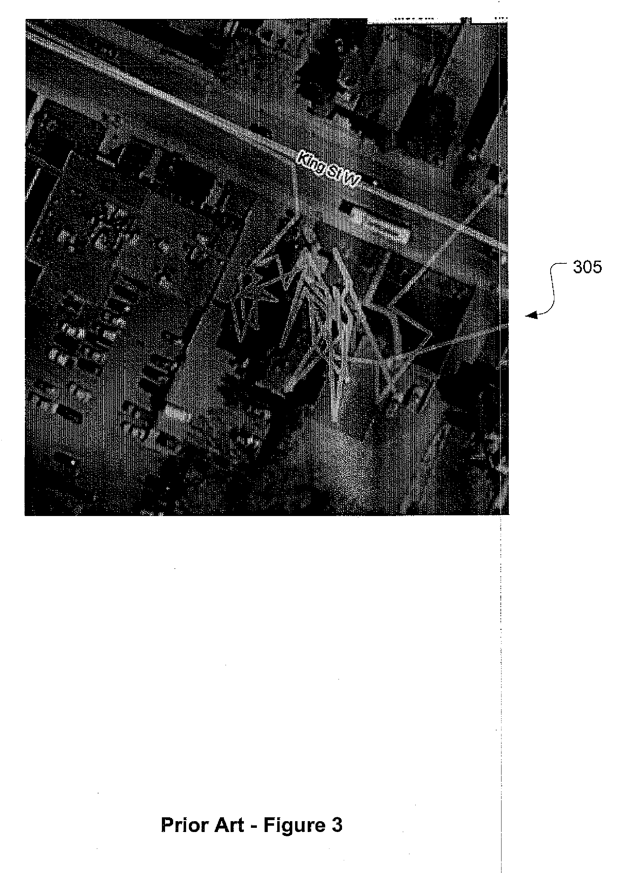

Figure 3 is an example illustration depicting the output of a mapping location application unimproved by this disclosure. Sometimes the location module or data module may generate a status update that is erroneous or unnecessary. For example, breadcrumb trail 305 represents a location history of a mobile communication device reporting erroneous location measurements while stationary inside a building. In this example, a location module using GPS (or other satellite based location system) may generate erroneous measurements when indoors or in poor GPS coverage areas. In some location modules the location module may generate many different measurements of the current location even when the mobile communications device is stationary in a single actual location. In such cases, the mobile communications device is said to be "loitering" in one location.

In light of the goal of conserving resources and providing useful status updates, it would be an improvement in the art to reduce transmission of erroneous status updates when a mobile communications device remains in a single actual location for a period of time. The algorithm-based filters described in this disclosure may be used, for example, to detect loitering, and to reduce the number of the status updates generated into fewer status updates representing the actual location of the device during times when the device is loitering.

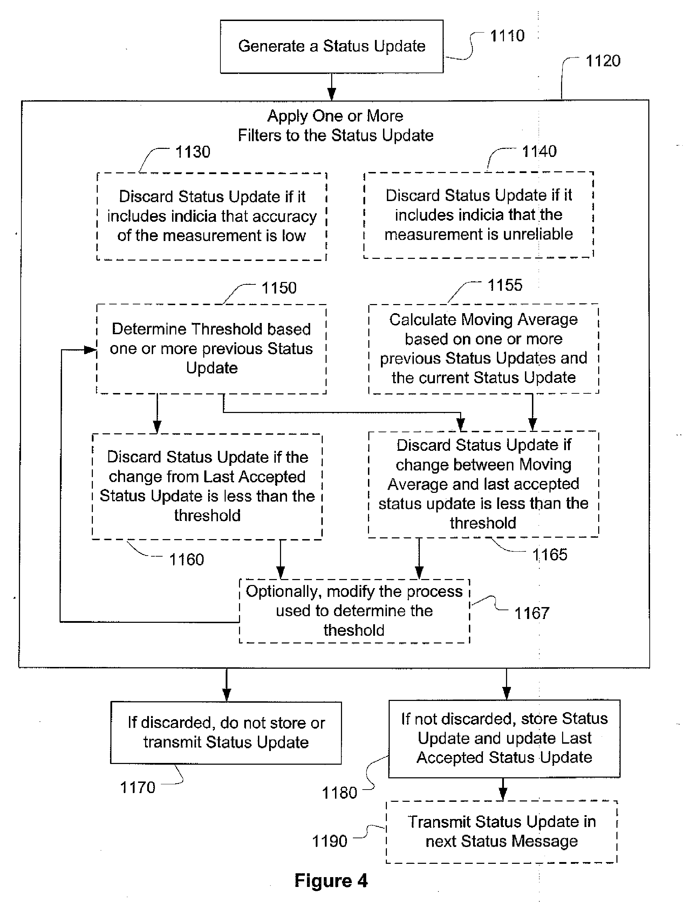

Figure 4 is a flowchart illustrating an example embodiment of a method according to an aspect of the present disclosure for filtering status updates to be sent by the mobile communications device. The steps or operations described herein are examples. There may be many variations to these steps or operations without departing from the scope of this disclosure. For instance, where appropriate, the steps may be performed in a differing order, or steps may be added, deleted, or modified. The method may reduce the number of status updates provided to a recipient application by applying algorithm-based filters. This may be used for status updates transmitted over a wireless network to a recipient application, and may also be used for status updates used by a local application running on the mobile communications device which generates the status updates.

In step 1110, mobile communications device 110 generates a status update using a location module or data module in the mobile communications device. The status update is sent to a filter module which applies one or more members of a group 1120 of filtering steps (described further in greater detail) used to reduce status updates. The filter module may be implemented using the processor and memory of the mobile communications device, or may be logic encoded in a filter apparatus in the mobile communications device. These filters are described in more detail below. If the status update is not discarded by any of the filters implemented in group 1120, the mobile communications device 110 stores the status update in the memory of the mobile communications device 110 and updates a portion of the memory used to store the last accepted status update in step 1180. The last accepted status update is used as a variable input for some of the filters which may be applied in any filter in step 1120. At step 1190, the mobile communications device 110 may optionally transmit the status update as part of a status message sent according to other embodiments in this disclosure. If the status update is discarded by any filter implemented in step 1120, then the status update is not stored or transmitted 1170 and is otherwise not used by the mobile communications device 110.

This disclosure describes as non-limiting examples four separate filters, and group 1120 may comprise one or more of these filters, which may be applied individually or in combination with each other. Although the filtering steps of group 1120 are shown in Fig. 4-6 as elements of a method, which might be implemented for example in a software-controlled computer system, one of skill in the art will appreciate that the filters could also be implemented using any other suitable filtering arrangement, including for example, appropriate digital filter circuits or other appropriate hardware. Although the filtering steps are described and shown in a particular order, the filters may be implemented in a different order.

A first filter may be implemented by filtering step 1130, where the status update is discarded if it includes indicia that accuracy of the measurement is low. For example, the location module or data module may provide a status update which comprises a measurement and an indication of the accuracy of the measurement. If the indication of the accuracy is below a threshold, the status update is discarded in step 1130. In some embodiments, the status update may comprise a soft decision value where the accuracy of the status update is reflected by the magnitude of the measurement in the soft decision value.

A second filter may be implemented by filtering step 1140, where the status update is discarded if it includes indicia that the measurement is unreliable. For example, the location module or data module may provide a status update which comprises a measurement and the number of inputs used to calculate the measurement. In the example of a location module comprising a GPS receiver, the GPS receiver may report the number of satellite signals used to determine the location measurement. If the number of inputs used to calculate the measurement is below a predetermined threshold, the status update is said to include indicia that the measurement is unreliable. In step 1140, the filter discards the status update based on the indicia that the measurement is unreliable.

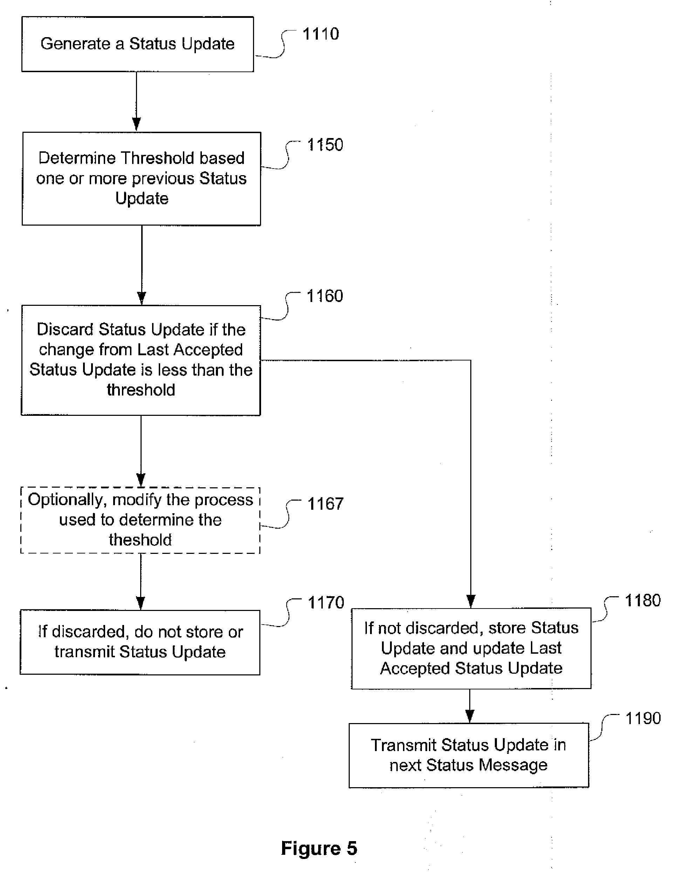

A third filter may be implemented by filtering steps 1150 and 1160. The third filter is described in more detail in Figure 5.

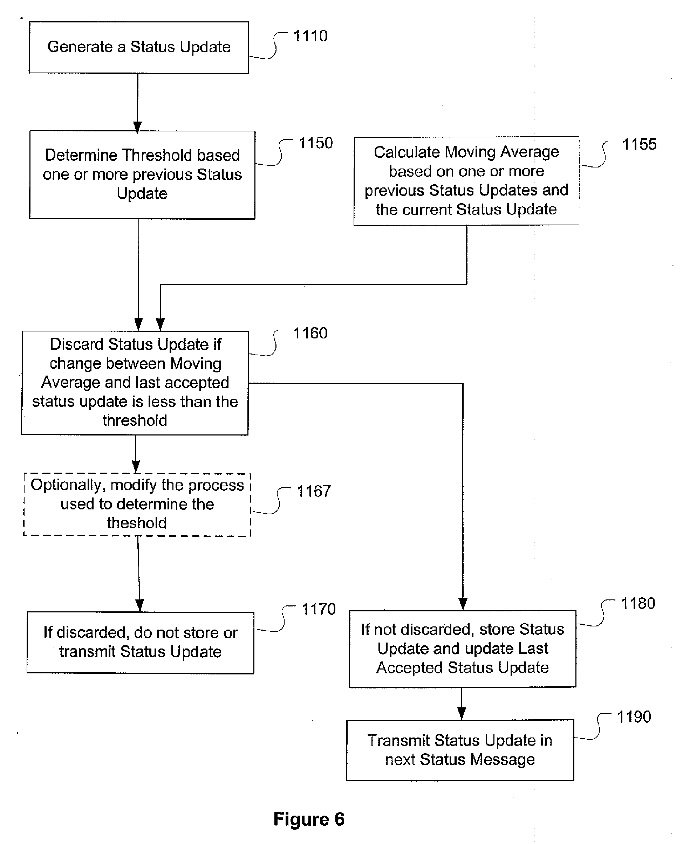

A fourth filter may be implemented by filtering steps filtering steps 1150, 1155, 1165. The fourth filter is described in more detail in Figure 6.

Figure 5 is a flowchart illustrating a filter which may be for filtering status updates to be sent by the mobile communications device. Just as in Figure 4, in step 1110, mobile communications device 110 generates a status update using a location module or data module in the mobile communications device. In step 1150, the mobile communications device 110 determines a threshold based on one or more previous status updates. This determination could be based on calculation using a mathematical function associated with the measurement data in the status update or may be based on a predetermined threshold associated with the measurement data. The threshold may be determined based on one or more previous status updates. The threshold is a variable value that may be determined by the filter module during filtering of each status update or may be determined periodically and used as a threshold for filtering several status updates. In step 1160, the mobile communications device calculates the difference between the status update and the last accepted status update. If it is below the threshold, the status update is discarded. For example, if the current status update represents a location less than 50 meters distance from the last accepted status update, the current status update may be discarded. In a variation to step 1160, the threshold may represent a maximum change allowed and the status update may be discarded if the status update is more than a threshold. In a further variation, there may be separate thresholds representing minimum and maximum changes, and the status update may be discarded if it is less than the minimum threshold or more than the maximum threshold.

Figure 6 is a flowchart illustrating a filter which may be for filtering status updates to be sent by the mobile communications device. Just as in Figure 4, in step 1110, mobile communications device 110 generates a status update using a location module or data module in the mobile communications device. At step 1150 the threshold is determined based on one or more previous status updates. At step 1155, the filter module calculates a moving average based on one or more previous status updates and the current status update. The moving average is an average of the measurements associated with the one or more previous status updates. At step 1165, the moving average is compared with the last accepted status update and if the difference is less than the threshold determined by step 1150, the current status update is discarded.

In relation to Figures 4-6, this disclosure describes an optional step 1167, wherein the filter module may modify the process used to determine the threshold in step 1150. As described below, the optional modification 1167 of the threshold allows for a changing threshold so that the filter module may discard status updates when they are unnecessary for the accuracy of recipient application or local application.

The threshold determined in step 1150 and the optional modification to the threshold in step 1167 may be used for various filters described in this disclosure. Step 1150 and 1167 may be implemented in a threshold determination module as part of the filter module. Using the example of a location update, the threshold may be a distance threshold. In a simple example the threshold may be a predetermined value, such as 50 meters distance from the last accepted status update. In another example, the threshold may be calculated in a threshold determination module implementing a mathematical function applied to the previous status update or status updates. At optional step 1167, the filter module may modify the process used to determine the threshold in step 1150. For example, if multiple consecutive status updates have been discarded by operation of step 1160 or step 1165, then the threshold may be increased. Using a location update as an example, if 10 location updates have been discarded because they are less than 50 meters distance from the last accepted status updated, the threshold may increase to 150 meters. By increasing the radius, the filter module will discard status updates that represent measurements when a mobile communications device is generally stationary at a location (e.g. loitering). Therefore if a certain number of status updates include measurements within a certain radius of the last accepted status update and are observed consecutively, then the radius is increased in size periodically up to a predetermined maximum threshold radius, such as 250 meters. In this example, the changing threshold provides a "stickiness" associated with the last accepted status update if the device is in one place for a long period of time. By filtering and discarding status updates using this changing threshold, the mobile communications device 110 reduces the number of status updates that must be sent in a status message used by a recipient application or the amount of status updates that must be processed by a local application.

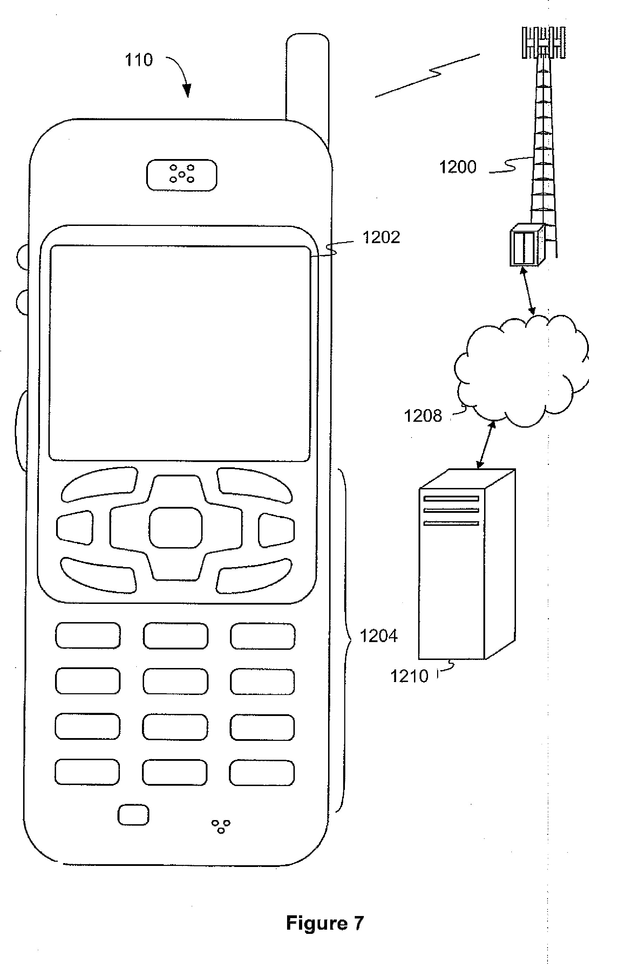

Figure 7 illustrates an example embodiment of a wireless communications system according to an aspect of the present disclosure, including an example embodiment of a mobile communications device 110. The mobile communications device 110 is operable for implementing aspects of the disclosure, but the disclosure should not be limited to these implementations. Modem mobile communications devices continue to benefit from improvements in processor design, memory, battery solutions, manufacturing processes, and software design. Mobile communications devices may have a variety of sizes, shapes, and features. For example, a mobile communications device 110 may be (or be a part of) a smart phone, wireless router, relay, laptop computer, tablet computer, GPS-enabled device, Navigation System, wireless mobile tracking device or any other device which may transmit information via a wireless network 1200.

The mobile communications device 110 may include a display 1202. The mobile communications device 110 may also include a touch-sensitive surface, a keyboard or other input keys generally referred as 1204 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The mobile communications device 110 may present options for the user to select, controls for the user to actuate, and/or cursors or other indicators for the user to direct.

The mobile communications device 110 may further accept data entry from the user, including numbers to dial or various parameter values for configuring the operation of the mobile communications device 110. The mobile communications device 110 may further execute one or more software or firmware applications in response to user commands. These applications may configure the mobile communications device 110 to perform various customized functions in response to user interaction. Additionally, the mobile communications device 110 may be programmed and/or configured over-the-air, for example from a wireless base station, a wireless access point, or a peer mobile communications device 110.

Among the various applications executable by the mobile communications device 110 is, for example, a web browser, which enables the display 1202 to show a web page. The web page may be obtained via wireless communications with a wireless network access node, a cell tower, a peer mobile communications device 110, or any other wireless communication network or system 1200. The network 1200 may be coupled to a wired network 1208, such as the Internet. Via the wireless link and the wired network, the mobile communications device 110 can have access to information on various servers, such as a server 1210. The server 1210 may provide content that may be shown on the display 1202. Alternately, the mobile communications device 110 may access the network 1200 through a peer mobile communications device 110 acting as an intermediary, in a relay type or hop type of connection. A mobile communications device 110 may be operable to transmit over one or more of any suitable wireless networks 1200, including but not limited to Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSDPA (HighSpeed Downlink Packet Access), IEEE 802.16e (also referred to as Worldwide Interoperability for Microwave Access or "WiMAX), IEEE 802.11a, 802.11b and/or 802.11g (also referred to as wireless local area network, "Wi-Fi" or "WLAN"), 3GPP Long Term Evolution (LTE), satellite communications and/or other wireless networks.

The mobile communications device 110 and other components described above may include a processing component that is capable of executing instructions related to the actions described above. Figure 8 illustrates an example embodiment of a system 1300 that includes a processing component 1310 suitable for implementing one or more of the embodiments earlier described herein. In addition to the processor 1310 (which may be referred to as a central processor unit or CPU), the system 1300 may include network connectivity devices 1320, random access memory (RAM) 1330, read only memory (ROM) 1340, secondary storage 1350, and input/output (I/O) devices 1360, location module 1390, data module 1395, filter module 1355. These components may communicate with one another via a bus 1370. In some cases, some of these components may not be present or may be combined in various combinations with one another or with other components not shown. These components may be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380, is shown as a separate component, the DSP 1380 may be incorporated into the processor 1310. Although the recipient callback module 1345, filter module 1355, location module 1390, and data module 1395 are shown as separate components, any of them may be incorporated into the processor 1310 or may be implemented using one or more components shown in Figure 8.

In some embodiments of the mobile communications device 110, the location module 1390 comprises a location determination system and obtains the location data to be used in a status update. The location determination system, in some embodiments comprises a GPS (Global Positioning System) receiver. The location determination, in some embodiments, may further comprise a processor for calculated location based on data received from the GPS receiver or any other device or system that provides location data to the mobile communications device 110. In other embodiments, the location determination system is a system that calculates location based on triangulation of radio signals or determination of the radio transmission path length or range, or some proxy therefore, of signals from several transmitters (e.g., LORAN). Other location determination systems include GLONASS and Galileo.

In some embodiments of the mobile communications device 110, the data module 1395 comprises a data acquisition system and obtains measurement data to be used in a status update. The data acquisition system, in some embodiments comprises a sensor and measurement processor. The data acquisition system, in some embodiments, may further comprise a processor for calculated measurements based on data received from the sensor or any other device or system that provides measurement data to the mobile communications device 110. In other embodiments, the data acquisition system is a system that utilizes other components of the mobile communications device 110 to acquire measurement data, such as a USB, Bluetooth, or serial device connected by a network connectivity device 1320.

The processor 1310 executes instructions, logic, codes, computer programs, or scripts that it may access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may, for example, be implemented as one or more CPU chips or modules. The processor 1310 may also be integrated with other functions of mobile communications device 110 in or on a single chip or module.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information. The network connectivity devices 1320 might also include one or more transceiver components 1325 capable of transmitting and/or receiving data wirelessly.

The RAM 1330 might be used to store volatile data and perhaps to store instructions that are executed by the processor 1310. The ROM 1340 is a non-volatile memory device that in some cases has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. However, the secondary storage 1350 could be implemented using any appropriate storage technology, including so-called "solid state disk", FLASH, EEPROM, or other generally non-volatile or persistent storage. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 1325 might be considered to be a component of the I/O devices 1360 instead of or in addition to being a component of the network connectivity devices 1320. Some or all of the I/O devices 1360 may be substantially similar to various components depicted in the previously described drawing of the mobile communications device 110, such as the display 1202 and the input 1204.

A person skilled in the art will appreciate that the embodiments described herein may be modified without departing from the scope of the present disclosure.

Some embodiments may employ a method and apparatus for filtering a status update based on a comparison of a last accepted status update and a comparison value based on a current status update when the comparison value is less than a determined threshold. The determined threshold is based on one or more previous status updates. In some embodiments, the determined threshold is increased if each previous comparison value associated with each of a predetermined number of previous status updates is less than the minimum threshold. In one embodiment, the comparison value is calculated and represents the difference between the last accepted status update and the current status update. In another embodiment, the comparison value is calculated and represents the difference between the last accepted status update and an average calculated with the current status update and a plurality of previous status updates.

Although example embodiments of this disclosure have been depicted and described in detail herein, it will be apparent to those skilled in the relevant art that various modifications, additions, substitutions, and the like can be made without departing from the concepts and embodiments disclosed herein, and these are therefore considered to be within the scope of the present subject matter as defined in the following claims.

## Claims

1. A method in a mobile communications device, comprising:
generating a new location update;
determining a distance threshold based on one or more previous location updates;
discarding the new location update when a calculated distance between the new location update and a most recently stored location update is less than the distance threshold; and
otherwise, storing the new location update in a memory of the mobile communications device as the most recently stored location update.

2. The method of claim 1, further comprising:
calculating a moving average using the new location update and a plurality of previous location updates; and
wherein the calculated distance between the new location update and the most recently stored location update comprises a difference between the moving average and the most recently stored location update.

3. The method of claim 1, wherein determining a distance threshold based on one or more previous location updates further comprises:
modifying the distance threshold if a predetermined number of consecutive previous location updates have been discarded.

4. The method of claim 3, wherein modifying the distance threshold comprises increasing the distance threshold.

5. The method of claim 1, further comprising:
transmitting the most recently stored location update.

6. A mobile communications device, comprising:
a location module for generating a location update;
a filter module, comprising a threshold determination module for determining a distance threshold based on one or more previous location updates, wherein the filter module is operable to discard the location update if a calculated distance between the location update and a most recently stored location update is less than the distance threshold.

7. The mobile communications device of claim 6, wherein the comparison value is a difference between the most recently stored location update and an average calculated with the current location update and a plurality of previous location updates.

8. The mobile communications device of claim 6, wherein the threshold determination module is configured to increase the minimum threshold when if each previous comparison value associated with each of a predetermined number of previous location updates is less than the minimum threshold.

9. A system for filtering location updates, comprising :
a location determination system that generates a new location update; and
a processor configured to:
determine a distance threshold based on one or more previous location updates;
discard the new location update when a calculated distance between the new location update and a most recently stored location update is less than the distance threshold; and
otherwise, store the new location update in the memory as the most recently stored location update.
